# EUROPEAN PATENT SPECIFICATION

(11) **EP 3 096 115 B1**
(45) Date of publication and mention of the grant of the patent: **05.05.2021**
(21) Application number: 16168757.9
(22) Date of filing: 09.05.2016
(51) Int. Cl.: G01F 19/00

(54) **NESTING MEASURING CUPS**
STAPELBARE MESSBECHER
GOBELETS DE MESURE EMBOÎTABLES

(30) Priority: 20.05.2015 US 201514717355
(43) Date of publication of application: 23.11.2016
(73) Proprietor: Dart Industries Inc., Orlando, Florida 32837 (US)
(72) Inventor: Wiggins, James Michael, Orlando, FL 32837 (US)
(74) Representative: Forresters IP LLP

(56) References cited:
- EP-A1- 2 287 014
- US-A1- 2006 277 994
- US-A1- 2010 089 151
- US-A1- 2012 079 881

## Description

### BACKGROUND OF THE INVENTION

The present invention relates in general to measuring cups, and more particularly to nesting measuring cups which have measurement indicators, such as printed or embossed indicia on their handles, which handles can be fanned out so that the user may quickly determine which cup is the cup the user wants to use. Even more particularly, the invention relates to measuring cups which can be fanned out in both directions so as to display English, (more commonly known as U.S. Standard measures) or metric measures depending on the user's preference.

Measuring cups, including measuring cups with handles or other portions having indicia, including nesting measuring cups, are known in the art.

US 2006/0277994 A1 discloses a measuring cup portion formed of a flexible material such as silicone secured to a rigid annular portion to maintain the shape of the opening of the cup.

EP 2287014 A1 discloses a marker carrier device for carrying markers (for example for marking electric cables) comprising means for selecting individual marker elements with a predetermined indicium.

### SUMMARY OF THE INVENTION

An object of the present invention is to provide a nesting measuring cup which overcomes the drawbacks of the prior art.

A further object of the present invention is to provide a set of nesting measuring cups which can display more types of measurements in a fanned out position.

Another object of the present invention is to provide a set of measuring cups which can alternately display either English or metric measurement, as the user prefers.

A further object of the present invention is to provide a set of nesting measuring cups having handles which can be fanned out, and which have one or more stops for fixing the handles in a pre-determined fanned out position.

These and other objects are achieved by a set of measuring cups having handles which can be fanned out in one or two directions, such as clockwise and counter-clockwise, and which fanned out positions may be fixed in one or more of the fanned out positions including improved features. The inventive nesting measuring cups include a novel combination of a set of nesting measuring cups including a first measuring cup having a measuring portion for holding and measuring a first volume, a first handle provided on the first measuring portion, and the measuring cup including an upper face and a lower face. A first pour spout is provided adjacent to the upper face of the first measuring portion, the first pour spout having two spaced apart end walls defining the first pour spout. Also, a second measuring cup having a second measuring portion for holding and measuring a second volume is provided, as well as a second handle provided on the second measuring portion, the second measuring volume being smaller than the first measuring volume, and the second measuring portion nesting inside the first measuring portion. A second pour spout is provided adjacent the upper face of the second measuring portion; and, a post is provided on the lower face of the second measuring portion, the post being engageable with a stop on the upper face of the first measuring portion, so that the user may rotate the second measuring cup relative to the first measuring cup until the post engages the stop for stopping the rotation of the second measuring cup relative to the first measuring cup.

In accordance with the present invention, there is provided a set of nesting measuring cups, comprising: a first measuring cup having a measuring portion for holding and measuring a first volume, a first handle provided on said first measuring portion, a first volume indicator being provided on said first handle, and said first measuring cup including an upper face and a lower face; a first pour spout provided adjacent to said upper face of said first measuring portion, said first pour spout having two spaced apart end walls defining said first pour spout; a second measuring cup having a second measuring portion for holding and measuring a second volume, a second handle provided on said second measuring portion, a second volume indicator being provided on said second handle, said second measuring volume being smaller than said first measuring volume, and said second measuring portion nesting inside said first measuring portion; a second pour spout provided adjacent said an upper face (96) of said second measuring portion; and characterised by a stop provided on said lower face of said second measuring portion, said stop being engageable with an abutment adjacent said upper face of said first measuring portion, so that the user may rotate said second measuring cup relative to said first measuring cup until said stop engages said abutment for stopping the rotation of said second measuring cup relative to said first measuring cup with said first and second handles offset from each other in a fanned out position.

Preferably, said abutment includes at least one of said spaced apart end walls of said first pour spout, so that the user may rotate said second measuring cup relative to said first measuring cup until said stop engages said at least one end wall of said first pour spout for stopping the rotation of said second measuring cup relative to said first measuring cup with said first and second handles offset from each other in a fanned out position.

Conveniently, said stop is engageable with said first pour spout of said first measuring portion, said abutment includes a first and a second end of said spaced apart end walls of said first pour spout, so that the user may rotate said second measuring cup in a clockwise direction relative to said first measuring cup until said stop engages said first end wall of said first pour spout for stopping the rotation of said second measuring cup relative to said first measuring cup in a first fanned out position, and so that the user may rotate said second measuring cup in a counter-clockwise direction relative to said first measuring cup until said stop engages said second end wall of said first pour spout for stopping the rotation of said second measuring cup relative to said first measuring cup in a second fanned out position.

Conveniently, said first and second volume indicators include English and/or metric measurements.

Preferably, said first handle and second handle can be aligned, and said post is free of engagement with both end walls of said first pour spout when said first and second handles are aligned.

Advantageously, said first measuring portion includes a further pour spout spaced apart from said first pour spout, said further pour spout includes first and a second spaced apart end walls; said stop includes a further stop engageable with said first and second spaced apart end walls of said further pour spout; and said abutment includes said first and a second end walls of said first pour spout, and said abutment includes said first and second spaced apart end walls of said further pour spout, so that the user may rotate said second measuring cup in a clockwise or counter-clockwise direction relative to said first measuring cup until said stop engages one of said first and a second end walls of said first pour spout and engages one of said first end walls of said further pour spout for stopping the rotation of said second measuring cup relative to said first measuring cup in a fanned out position.

Preferably, said stop includes a post provided on said first measuring cup; and said abutment includes a first and second side wall provided on said second measuring cup, so that the user may rotate said second measuring cup in a clockwise or counter-clockwise direction relative to said first measuring cup until said stop engages one of said first and a second side walls of said second measuring cup for stopping the rotation of said second measuring cup relative to said first measuring cup in a clockwise or counter-clockwise fanned out position.

Conveniently, a slot including first and second side end walls is provided on said second measuring cup; said stop includes a post provided on said first measuring cup; and said abutment includes said first and second side end walls of said slot, so that the user may rotate said second measuring cup in a clockwise or counter-clockwise direction relative to said first measuring cup until said post engages one of said first and a second end walls of said slot for stopping the rotation of said second measuring cup relative to said first measuring cup in a clockwise or counter-clockwise fanned out position, respectively.

### BRIEF DESCRIPTION OF THE DRAWINGS

The objects and features of the invention noted above are explained in more detail with reference to the drawings, in which like reference numerals denote like elements, and in which:
FIG. 1 is a top front perspective view of a first embodiment of a set of nesting measuring cups according to the present invention in a position in which the handles are aligned;
FIG. 2 is a top front perspective view of the embodiment of FIG. 1 in which the handles are fanned out in a counter-clockwise direction so that English measurements are displayed.
FIG. 3 is a bottom perspective view of one of the nesting measuring cups of Fig. 1;
FIG. 4 is a top plan view of the nesting measuring cups of Fig. 1;
FIG. 5 is a top plan view of the measuring cups of FIG. 1 in which the cups have been fanned out in a clockwise direction so that the metric measurements are displayed;
FIG. 6 is a partially broken away top front perspective view of FIG. 2 in which a stop may be seen engaging with an abutment on an upper face of the measuring cup below the top measuring cup for fixing the position of the top measuring cup relative thereto;
FIG. 7 is a top plan view of an embodiment not according to the present invention with the handles aligned;
FIG. 8 is a top plan view of FIG. 7 in which the handles are fanned out;
FIG. 9 is a top plan view of another embodiment of the invention with the handles aligned;
FIG. 10 is a top plan view of the embodiment of FIG. 9 in which the handles are fanned out;
FIG. 11 is a top plan view of a further embodiment not according to the present invention with the handles aligned;
FIG. 12 is a top plan view of FIG. 11 in which the handles are fanned out;
FIG. 13 is a top plan view of another embodiment of the invention with the handles aligned;
FIG. 14 is a top plan view of the embodiment of FIG. 13 in which the handles are fanned out;
FIG. 15 is a top plan view of a further embodiment not according to the present invention with the handles aligned;
FIG. 16 is a top plan view of FIG. 15 in which the handles are fanned out.

### DETAILED DESCRIPTION OF THE INVENTION

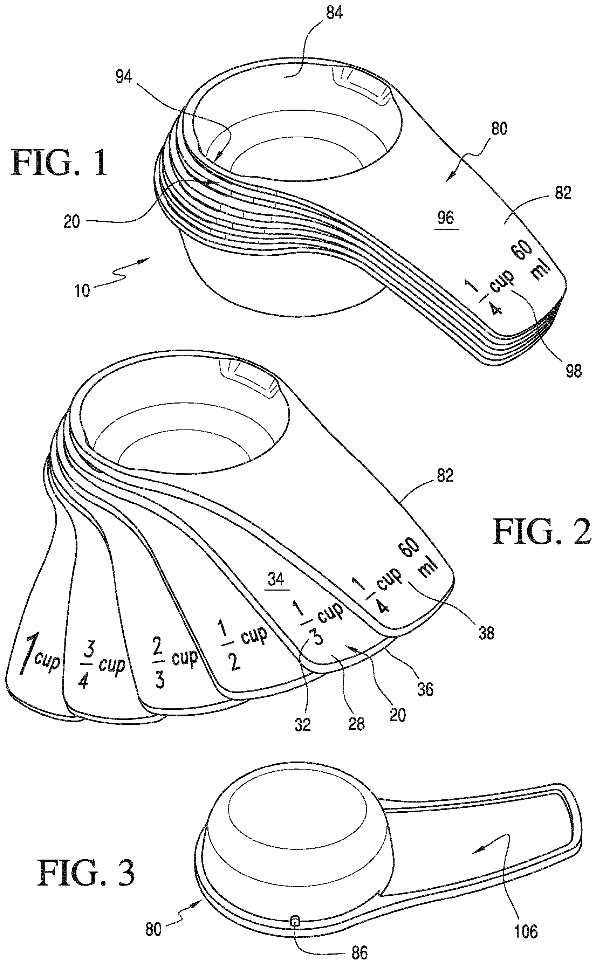

With reference to FIGS. 1-6, an embodiment of a set of nesting measuring cups 10 according to the invention is shown. Nesting cups 10 includes a first measuring cup 20 having a measuring portion 24 serving as a nesting portion for holding and measuring a first volume. A first handle 28 is provided on first measuring portion 24, and the measuring cup 20 includes a measuring indicator or indicia 32, such as the illustrated "1/3 cup 80 mL," an upper face 34 and a lower face 36.

A first pour spout 40 is provided on first measuring cup 20 adjacent to upper face 34 of first measuring portion 24, the first pour spout 40 having two spaced apart end walls 44, 46 defining ends of first pour spout 40. End walls 44, 46 each serves as a respective abutment in use, as discussed below.

A second measuring cup 80 having a second measuring portion 84 for holding and measuring a second volume is provided, as well as a second handle 82 provided on second measuring portion 84. As shown in FIGS. 1-6, second measuring portion 84 is smaller than first measuring portion 24, as will be readily appreciated, because second measuring portion 84 nests within; i.e. fits in, larger first measuring portion 24, as shown. A stop 86 may be provided as best seen in FIGS. 3-6. Stop 86 serves to limit movement when it engages the respective abutments in the form of end walls 44, 46 of spout 40 to fix or stop movement of handles 20 and 80 relative to each other in the fixed fanned positions of FIGS. 2, 5, and 6. A second pour spout 94 is provided adjacent an upper face 96 of second measuring cup 80. A second volume indicator 98 or measuring indicia 98 is provided on upper face 96, a second volume indicator 98 includes one or both of English and metric measures, as shown, or measures from another measurement system, as will be readily appreciated. In FIGS. 1-6, second volume indicator 98 has the indicia "¼ cup 60 mL" as those measures are approximately the same. The other measuring cups described below have English and/or metric measurements corresponding to the respective volumes held in the respective measuring portions.

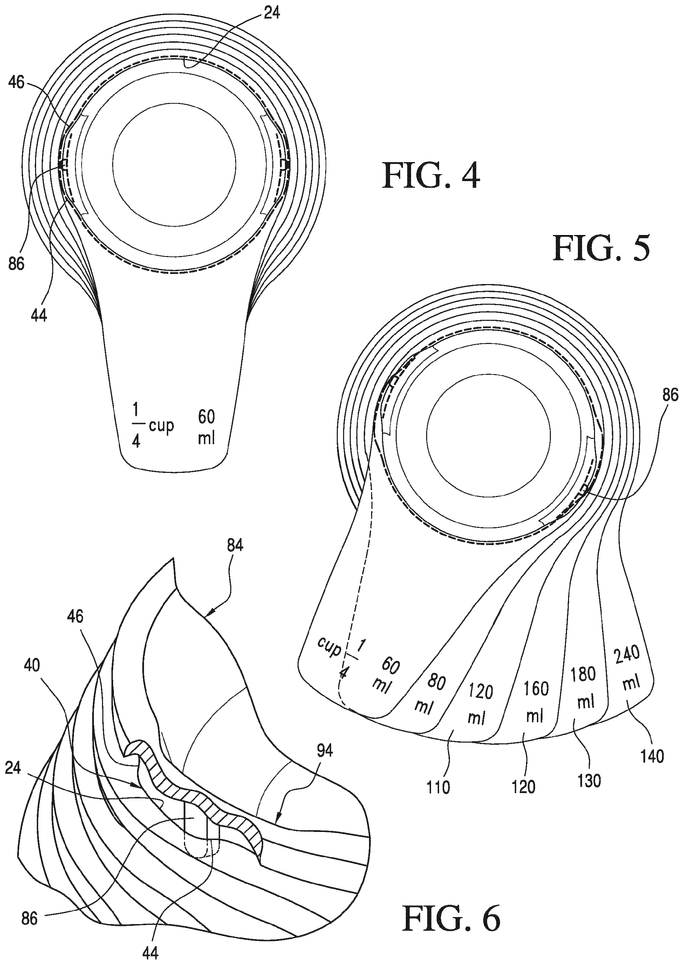

As seen in FIGS. 3-6, stop 86 is in the form of an extension formed on an outer wall of second measuring cup 80, as shown, may be spaced apart from the outer wall of cup 80 as a free-standing extension, or may be provided elsewhere as will be readily appreciated, and as will be described below in relation to further embodiments of the invention. Stop 86 is provided on the lower face 106 of cup 80 and is configured for being engageable with one or both of abutments in the form of end walls 44, 46 on upper face 34 of first measuring portion 24. Stop 86 is located so that a user may rotate second measuring cup 80 relative to first measuring cup 20 until stop 86 engages end wall 46 or 44, as shown, such engagement stops the rotation of first and second cups 20 and 80 relative to each other. As shown in FIG. 2, when the user rotates second cup 80 counter-clockwise as viewed from above, stop 86 engages end wall 44 of spout 40 and moves no further counter-clockwise relative thereto. In that manner, cups 20 and 80 are stopped or fixed in a fanned out configuration as shown in FIGS. 2 and 6, so that the English measurements are visible to the user, as best seen in FIG. 2. As may be best seen by considering the top plan view of FIG. 4, when the handles of first measuring cup 20 and second measuring cup 80 are aligned, stop 86 is engaging neither one of end walls 44 and 46. Thus, the user must align handles 28 and 82 by hand. Thanks to the location of stop 86, as shown, in this embodiment the user is able to fan out the handles in either rotational direction to display the English measurements of FIG. 2 or the metric measurements of FIG. 5.

Thus, if the user would like to measure using metric measurements, then the user would rotate second cup 80 in a clockwise direction, as viewed in FIG. 5. When the user moves second measuring cup 80 clockwise relative to first measuring cup 20, the fanned out position of FIG. 5 is achieved in which the metric measures 60 mL, 80 mL, and so forth are displayed. The clockwise rotation of second cup 80, causes stop 86 to move clockwise relative to spout 40 of measuring cup 20 until it engages and is stopped by end wall 46 serving as the abutment. As will be readily appreciated, the user when fanning out the measuring cups to display the metric measurements, could have moved first measuring cup 20 counter-clockwise relative to second measuring cup 80 and would have achieved the fanned out position of FIG. 5. As will be readily understood, in the embodiment of FIGS. 1-6, the user could have moved any one of a third measuring cup 110, a fourth measuring cup 120, a fifth measuring cup 130, and a sixth measuring cup 140 to have achieved either the fanned out position of FIG. 5 or the fanned out position of FIG. 2, as shown.

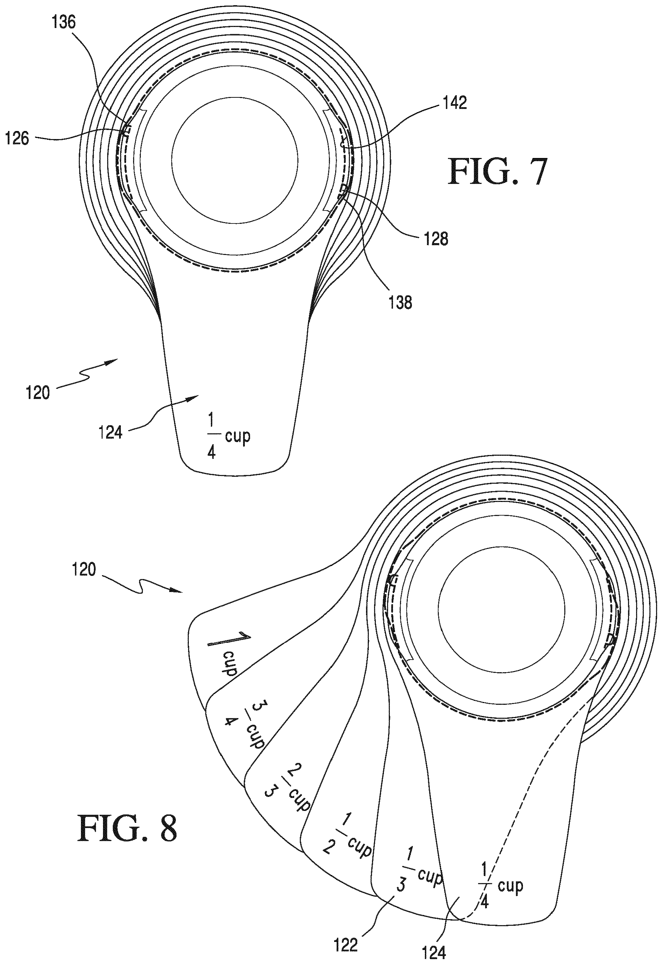

FIGS. 7 and 8 illustrate an embodiment of nesting cups 120 not according to the present invention. A lower or first cup 122 may be sized so that a second or top cup 124, as shown, may nest therein. Second cup may include a stop in the form of a post or extension 126 which engages an end wall 136 functioning as an abutment, for aligning the handles as in FIG. 7, thanks to the provision of a further post 128 which may engage and be stopped by an end wall or abutment 138 of a further spout 142 as shown. In this embodiment not according to the present invention cups 120 fan in only one direction and stops 136 and 138 fix the rotation of the cups in the fanned out position of FIG. 8 and in the aligned position of FIG. 7. Only one type of measurement need be provided, as shown, although a second type of measurement could be provided, although it would be hidden or visible in the fanned out position, depending on the size and location of the second type of measurement.

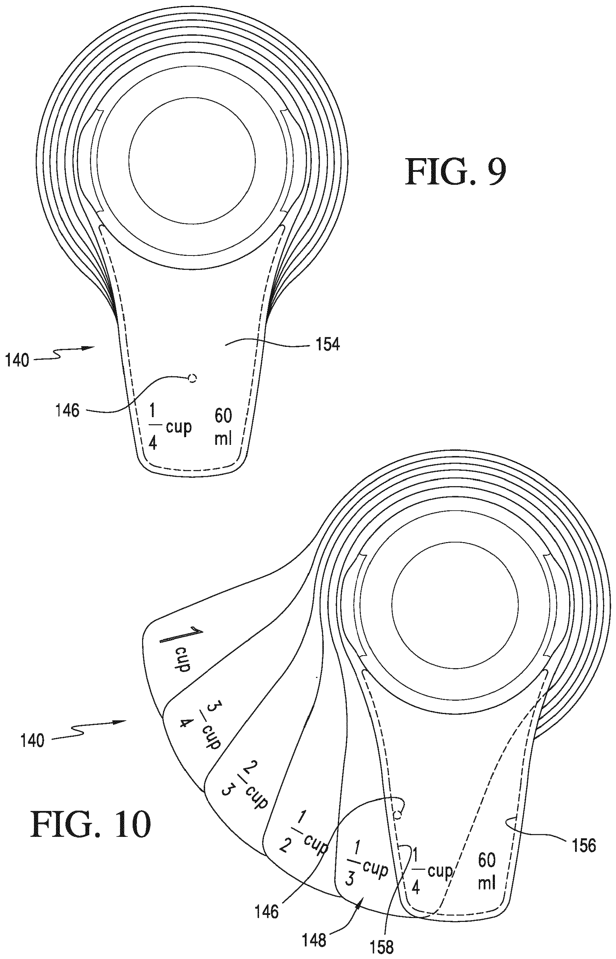

FIGS. 9 and 10 show yet another preferred embodiment of a set of cups 140 according to the invention. Cups 140 include a stop in the form of a post 146 on a lower cup 148, post 146 being located so as engage respective abutments in the form of side walls 156 and 158 of an upper cup 154 to provide rotation and fanning of respective cups in both directions, i.e. both clockwise and counter-clockwise, the clockwise fanned position being shown in FIG. 10. Given the location of post 146 in this embodiment the user aligns the handles by hand such as shown in FIG. 9. Measuring indicia are provided.

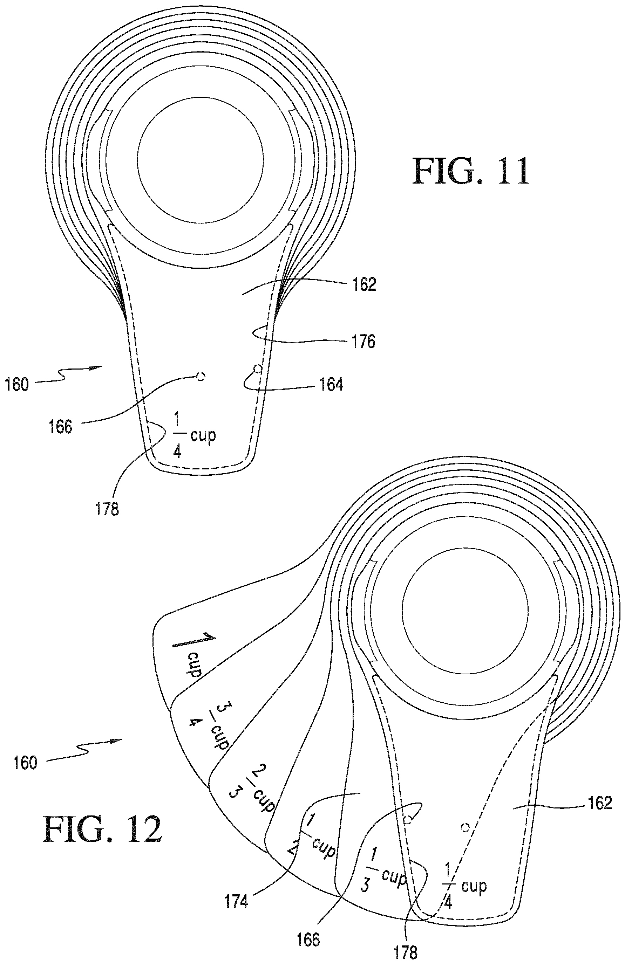

FIGS. 11 and 12 show yet another embodiment not according to the present invention in which a set of nesting cups 160 includes an upper cup 162, and two stops in the form of posts 164 and 166 provided on a lower cup 174 as shown. Posts 164, 166 engage with walls of upper cup 162 as shown. As will be readily appreciated, in this embodiment not according to the present invention, post 164 and 166 may be provided on an upper face of lower cup 174. As will be readily appreciated, the cups fan in only one direction, post 166 stops the fanning in the clockwise direction of FIG. 12, post 164 stopping the rotation in the counter-clockwise direction of FIG. 11, so as to align the handles in arrayed and aligned positions, thanks to the provision of outer downwardly extending walls 176 and 178 of upper cup 162, as shown.

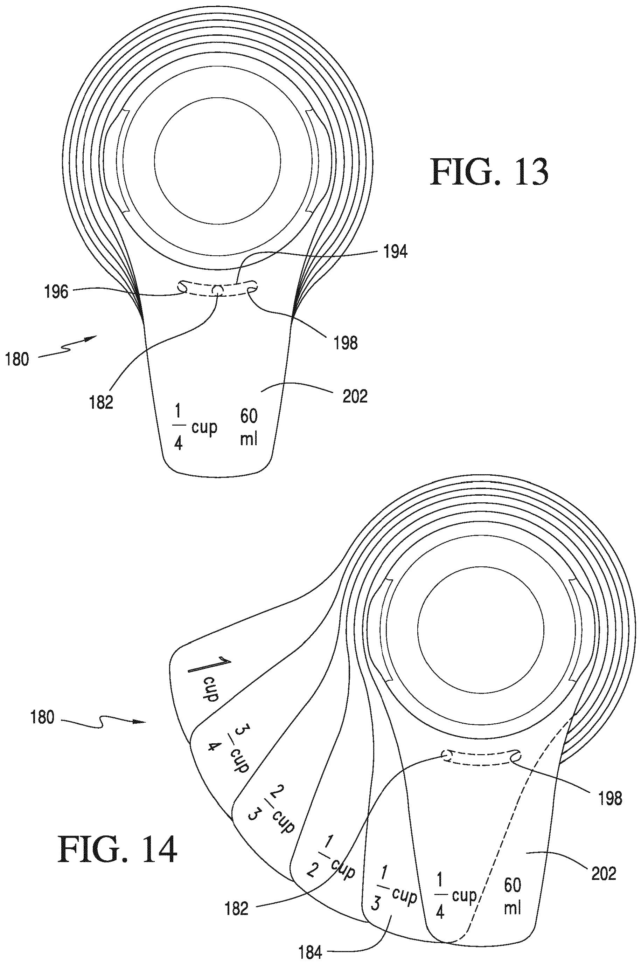

FIGS. 13 and 14 show another preferred embodiment of a set of nesting cups 180 according to the invention. Nesting cups 180 include a stop in the form of a post 182 which is provided on an upper face of the handle of a lower cup 184 ("the 1/3 cup") and a slot 194 having abutments in the form of end walls 196 and 198 which is provided in a lower face of an upper cup 202, as shown. It will be appreciated, as in the other embodiments not according to the present invention, that alternatively, slot 194 could be provided on lower cup 184 and post 182 could be provided on upper cup 202. Given the location of slot 194, end walls 196 and 198, and post 182, it will be seen that this set of nesting cups 180 may be fanned in both directions, i.e. clockwise and counter-clockwise. Thus, both English and metric measurements have been shown.

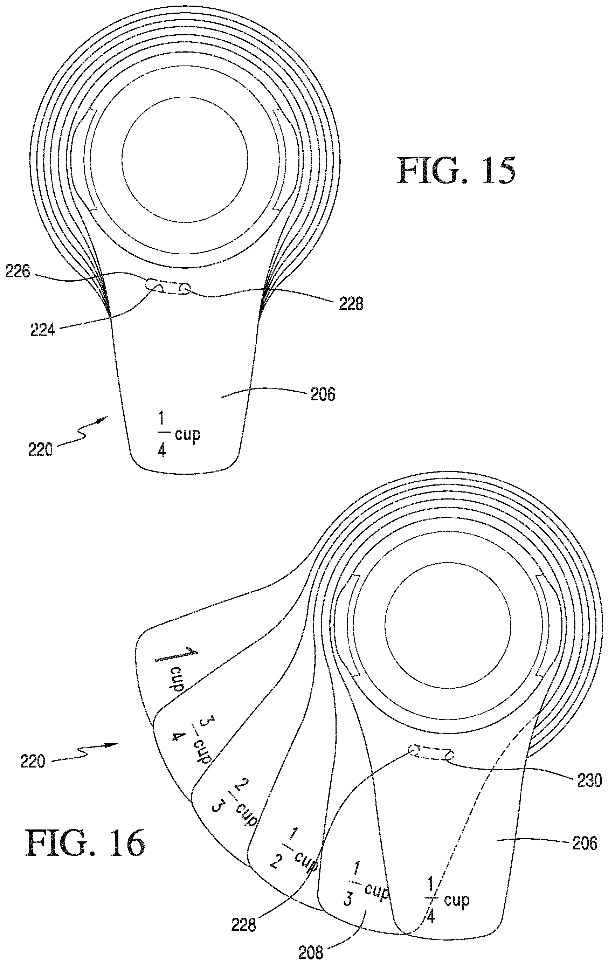

FIGS. 15 and 16 show a further embodiment of cups 220 not according to the present invention. Cups 220 may include an upper measuring cup 206 and a lower measuring cup 208 located below cup 206 as shown. A slot 224 may be provided on lower face of upper cup 206, and slot 224 may be offset as shown, so that the cups fan in only one direction, such as the illustrated clockwise direction. When fanning, a stop in the form of a post 228 will engage one of spaced apart abutments in the form of end walls 226 and 230 of slot 224 depending on whether the cups are aligned as in FIG. 15 or are fanned out as in FIG. 16. As only one fanning direction is provided for in this embodiment, only one type of measurement need be provided on the cups, such as the illustrated English measurements. It will be appreciated that both English and metric measurements could be shown, as in the other embodiments which fan only in a single direction, depending on the user's preference.

From the foregoing it will be seen that this invention is one well adapted to attain all ends and objects set forth above together with the other advantages which are inherent within its structure.

It will be understood that certain features and subcombinations are of utility and may be employed without reference to other features and subcombinations. This is contemplated by and is within the scope of the claims.

Since many possible embodiments may be made of the invention without departing from the scope thereof, it is to be understood that all matter herein set forth of shown in the accompanying drawings is to be interpreted as illustrative, and not in a limiting sense.

When used in this specification and claims, the terms "comprises" and "comprising" and variations thereof mean that the specified features, steps or integers are included. The terms are not to be interpreted to exclude the presence of other features, steps or components.

## Claims

1. A set of nesting measuring cups (10), comprising:
a first measuring cup (20) having a measuring portion (24) for holding and measuring a first volume, a first handle (28) provided on said first measuring portion, a first volume indicator (32) including measures from two measurement systems being provided on said first handle, and said first measuring cup including an upper face (34) and a lower face (36);
a first pour spout (40) provided adjacent to said upper face of said first measuring portion, said first pour spout having two spaced apart end walls (44, 46) defining said first pour spout;
a second measuring cup (80) having a second measuring portion (84) for holding and measuring a second volume, a second handle (82) provided on said second measuring portion, a second volume indicator (98) including measures from two measurement systems being provided on said second handle, said second measuring volume being smaller than said first measuring volume, and said second measuring portion nesting inside said first measuring portion;
a second pour spout (94) provided adjacent an upper face (96) of said second measuring portion;
and **characterised by**
a stop (86) provided on said lower face of said second measuring portion, said stop being engageable with an abutment on said upper face of said first measuring portion, wherein said abutment includes a first and a second end of said spaced apart end walls of said first pour spout, so that the user may rotate said second measuring cup in a clockwise direction relative to said first measuring cup until said stop engages said first end wall of said first pour spout for stopping the rotation of said second measuring cup relative to said first measuring cup in a first fanned out position, and so that the user may rotate said second measuring cup in a counter-clockwise direction relative to said first measuring cup until said stop engages said second end wall of said first pour spout for stopping the rotation of said second measuring cup relative to said first measuring cup in a second fanned out position, thereby alternately displaying either measurement system.

2. The set of measuring cups according to any preceding Claim, wherein said first and second volume indicators include English and/or metric measurements.

3. The set of measuring cups according to any preceding Claim, wherein:
said first handle and second handle can be aligned, and said stop is free of engagement with both end walls of said first pour spout when said first and second handles are aligned.

4. The set of measuring cups (120) according to any preceding Claim, wherein:
said first measuring portion includes a further pour spout (142) spaced apart from said first pour spout, said further pour spout includes first and a second spaced apart end walls (138);
said stop (126) includes a further stop (128) engageable with said first and second spaced apart end walls of said further pour spout; and
said abutment includes said first and second spaced apart end walls of said further pour spout, so that the user may rotate said second measuring cup in a clockwise or counter-clockwise direction relative to said first measuring cup (122) until said stop engages one of said first and second end walls of said first pour spout and engages one of said first and second end walls of said further pour spout for stopping the rotation of said second measuring cup relative to said first measuring cup in a fanned out position.

5. A set of nesting measuring cups (140), comprising:
a first measuring cup (20) having a measuring portion (24) for holding and measuring a first volume, a first handle (28) provided on said first measuring portion, a first volume indicator (32) including measures from two measurement systems being provided on said first handle, and said first measuring cup including an upper face (34) and a lower face (36);
a first pour spout (40) provided adjacent to said upper face of said first measuring portion, said first pour spout having two spaced apart end walls (44, 46) defining said first pour spout;
a second measuring cup having a second measuring portion (84) for holding and measuring a second volume, a second handle (82) provided on said second measuring portion, a second volume indicator (98) including measures from two measurement systems being provided on said second handle, said second measuring volume being smaller than said first measuring volume, and said second measuring portion nesting inside said first measuring portion;
a second pour spout (94) provided adjacent an upper face (96) of said second measuring portion,
and **characterised by**:
a stop including a post (146) provided on the upper face of said first handle; and
an abutment including a first and second side wall (156, 158) provided on a lower face of said second handle, so that the user may rotate said second measuring cup in a clockwise or counter-clockwise direction relative to said first measuring cup until said stop engages one of said first and second side walls of said second measuring cup for stopping the rotation of said second measuring cup relative to said first measuring cup in a clockwise or counter-clockwise fanned out position, thereby alternately displaying either measurement system.

6. A set of nesting measuring cups (180), comprising:
a first measuring cup (20) having a measuring portion (24) for holding and measuring a first volume, a first handle (28) provided on said first measuring portion, a first volume indicator (32) including measures from two measurement systems being provided on said first handle, and said first measuring cup including an upper face (34) and a lower face (36);
a first pour spout (40) provided adjacent to said upper face of said first measuring portion, said first pour spout having two spaced apart end walls (44, 46) defining said first pour spout;
a second measuring cup having a second measuring portion (84) for holding and measuring a second volume, a second handle (82) provided on said second measuring portion, a second volume indicator (98) including measures from two measurement systems being provided on said second handle, said second measuring volume being smaller than said first measuring volume, and said second measuring portion nesting inside said first measuring portion;
a second pour spout (94) provided adjacent an upper face (96) of said second measuring portion,
and **characterised by**:
a slot (194) including first and second side end walls (196) provided on the lower face of said second handle;
a stop including a post (182) provided on the upper face of said first handle; and
an abutment including said first and second side end walls of said slot, so that the user may rotate said second measuring cup (202) in a clockwise or counter-clockwise direction relative to said first measuring cup (184) until said post engages one of said first and second end walls of said slot for stopping the rotation of said second measuring cup relative to said first measuring cup in a clockwise or counter-clockwise fanned out position,
respectively, thereby alternately displaying either measurement system.

## Patentansprüche

1. Satz von verschachtelten Messbechern (10), der umfasst:
einen ersten Messbecher (20), der einen Messabschnitt (24) zum Halten und Messen eines ersten Volumens aufweist, einen ersten Griff (28), der an dem ersten Messabschnitt bereitgestellt ist, eine erste Volumenanzeige (32), die Messwerte aus zwei Messsystemen beinhaltet, die an dem ersten Griff bereitgestellt ist, und wobei der erste Messbecher eine obere Fläche (34) und eine untere Fläche (36) beinhaltet;
einen ersten Ausguss (40), der angrenzend an die obere Fläche des ersten Messabschnitts bereitgestellt ist, wobei der erste Ausguss zwei beabstandete Endwände (44, 46) aufweist, die den ersten Ausguss definieren;
einen zweiten Messbecher (80), der einen zweiten Messabschnitt (84) zum Halten und Messen eines zweiten Volumens aufweist, einen zweiten Griff (82), der an dem zweiten Messabschnitt bereitgestellt ist, eine zweite Volumenanzeige (98), die Messwerte aus zwei Messsystemen beinhaltet, die an dem zweiten Griff bereitgestellt ist, wobei das zweite Messvolumen kleiner als das erste Messvolumen ist und der zweite Messabschnitt in dem ersten Messabschnitt verschachtelt ist;
einen zweiten Ausguss (94), der angrenzend an eine obere Fläche (96) des zweiten Messabschnitts bereitgestellt ist; und
**gekennzeichnet durch**
einen Anschlag (86), der an der unteren Fläche des zweiten Messabschnitts bereitgestellt ist, wobei der Anschlag mit einem Widerlager an der oberen Fläche des ersten Messabschnitts in Eingriff bringbar ist, wobei das Widerlager ein erstes und ein zweites Ende der beabstandeten Endwände des ersten Ausgusses beinhaltet, so dass der Benutzer den zweiten Messbecher in eine Richtung im Uhrzeigersinn relativ zu dem ersten Messbecher drehen kann, bis der Anschlag in die erste Endwand des ersten Ausgusses zum Anhalten der Drehung des zweiten Messbechers relativ zu dem ersten Messbecher in einer ersten aufgefächerten Position in Eingriff kommt, und so dass der Benutzer den zweiten Messbecher in eine Richtung gegen den Uhrzeigersinn relativ zu dem ersten Messbecher drehen kann, bis der Anschlag in die zweite Endwand des ersten Ausgusses zum Anhalten der Drehung des zweiten Messbechers relativ zu dem ersten Messbecher in einer zweiten aufgefächerten Position in Eingriff kommt, wobei dadurch jedes Messsystem abwechselnd gezeigt wird.

2. Satz von Messbechern nach einem vorhergehenden Anspruch, wobei die erste und die zweite Volumenanzeige englische und/oder metrische Maße beinhalten.

3. Satz von Messbechern nach einem vorhergehenden Anspruch, wobei:
der erste Griff und der zweite Griff gleichgerichtet werden können und der Anschlag frei von einem Eingriff mit beiden Endwänden des ersten Ausgusses ist, wenn der erste und der zweite Griff gleichgerichtet sind.

4. Satz von Messbechern (120) nach einem vorhergehenden Anspruch, wobei:
der erste Messabschnitt einen weiteren Ausguss (142) beinhaltet, der von dem ersten Ausguss beabstandet ist, wobei der weitere Ausguss eine erste und eine zweite beabstandete Endwand (138) beinhaltet;
der Anschlag (126) einen weiteren Anschlag (128) beinhaltet, der mit der ersten und der zweiten beabstandeten Endwand des weiteren Ausgusses in Eingriff bringbar ist; und
das Widerlager die erste und die zweite beabstandete Endwand des weiteren Ausgusses beinhaltet, so dass der Benutzer den zweiten Messbecher in eine Richtung im Uhrzeigersinn oder gegen den Uhrzeigersinn relativ zu dem ersten Messbecher (122) drehen kann, bis der Anschlag an der ersten oder der zweiten Endwand des ersten Ausgusses in Eingriff kommt und an der ersten oder der zweiten Endwand des weiteren Ausgusses zum Anhalten der Drehung des zweiten Messbechers relativ zu dem ersten Messbecher in einer aufgefächerten Position in Eingriff kommt.

5. Satz von verschachtelten Messbechern (140), der umfasst:
einen ersten Messbecher (20), der einen Messabschnitt (24) zum Halten und Messen eines ersten Volumens aufweist, einen ersten Griff (28), der an dem ersten Messabschnitt bereitgestellt ist, eine erste Volumenanzeige (32), die Messwerte aus zwei Messsystemen beinhaltet, die an dem ersten Griff bereitgestellt ist, und wobei der erste Messbecher eine obere Fläche (34) und eine untere Fläche (36) beinhaltet;
einen ersten Ausguss (40), der angrenzend an die obere Fläche des ersten Messabschnitts bereitgestellt ist, wobei der erste Ausguss zwei beabstandete Endwände (44, 46) aufweist, die den ersten Ausguss definieren;
einen zweiten Messbecher, der einen zweiten Messabschnitt (84) zum Halten und Messen eines zweiten Volumens aufweist, einen zweiten Griff (82), der an dem zweiten Messabschnitt bereitgestellt ist, eine zweite Volumenanzeige (98), die Messwerte aus zwei Messsystemen beinhaltet, die an dem zweiten Griff bereitgestellt ist, wobei das zweite Messvolumen kleiner als das erste Messvolumen ist und der zweite Messabschnitt in dem ersten Messabschnitt verschachtelt ist;
einen zweiten Ausguss (94), der angrenzend an eine obere Fläche (96) des zweiten Messabschnitts bereitgestellt ist, und
**gekennzeichnet durch**:
einen Anschlag, der eine Stelle (146) beinhaltet, die auf der oberen Fläche des ersten Griffs bereitgestellt ist; und
ein Widerlager, das eine erste und eine zweite Seitenwand (156, 158) beinhaltet, die an einer unteren Fläche des zweiten Griffs bereitgestellt sind, so dass der Benutzer den zweiten Messbecher in eine Richtung im Uhrzeigersinn oder gegen den Uhrzeigersinn relativ zu dem ersten Messbecher drehen kann, bis der Anschlag mit der ersten oder der zweiten Seitenwand des zweiten Messbechers zum Anhalten der Drehung des zweiten Messbechers relativ zu dem ersten Messbecher in einer im Uhrzeigersinn oder gegen den Uhrzeigersinn aufgefächerten Position in Eingriff kommt, wobei dadurch jedes Messsystem abwechselnd gezeigt wird.

6. Satz von verschachtelten Messbechern (180), der umfasst:
einen ersten Messbecher (20), der einen Messabschnitt (24) zum Halten und Messen eines ersten Volumens aufweist, einen ersten Griff (28), der an dem ersten Messabschnitt bereitgestellt ist, eine erste Volumenanzeige (32), die Messwerte aus zwei Messsystemen beinhaltet, die an dem ersten Griff bereitgestellt ist, und wobei der erste Messbecher eine obere Fläche (34) und eine untere Fläche (36) beinhaltet;
einen ersten Ausguss (40), der angrenzend an die obere Fläche des ersten Messabschnitts bereitgestellt ist, wobei der erste Ausguss zwei beabstandete Endwände (44, 46) aufweist, die den ersten Ausguss definieren;
einen zweiten Messbecher, der einen zweiten Messabschnitt (84) zum Halten und Messen eines zweiten Volumens aufweist, einen zweiten Griff (82), der an dem zweiten Messabschnitt bereitgestellt ist, eine zweite Volumenanzeige (98), die Messwerte aus zwei Messsystemen beinhaltet, die an dem zweiten Griff bereitgestellt ist, wobei das zweite Messvolumen kleiner als das erste Messvolumen ist und der zweite Messabschnitt in dem ersten Messabschnitt verschachtelt ist;
einen zweiten Ausguss (94), der angrenzend an eine obere Fläche (96) des zweiten Messabschnitts bereitgestellt ist, und
**gekennzeichnet durch**:
einen Schlitz (194), der eine erste und eine zweite Seitenendwand (196) beinhaltet, der an der unteren Fläche des zweiten Griffs bereitgestellt ist;
einen Anschlag, der eine Stelle (182) beinhaltet, die auf der oberen Fläche des ersten Griffs bereitgestellt ist; und
ein Widerlager, das die erste und die zweite Seitenendwand des Schlitzes beinhaltet, so dass der Benutzer den zweiten Messbecher (202) in eine Richtung im Uhrzeigersinn oder gegen den Uhrzeigersinn relativ zu dem ersten Messbecher (184) drehen kann, bis der Anschlag mit der ersten oder der zweiten Endwand des Schlitzes zum Anhalten der Drehung des zweiten Messbechers relativ zu dem ersten Messbecher in einer im Uhrzeigersinn beziehungsweise gegen den Uhrzeigersinn aufgefächerten Position in Eingriff kommt, wobei dadurch jedes Messsystem abwechselnd gezeigt wird.

## Revendications

1. Ensemble de tasses à mesurer empilables (10), comprenant :
une première tasse à mesurer (20) ayant une partie de mesure (24) pour maintenir et mesurer un premier volume, une première poignée (28) prévue sur ladite première partie de mesure, un premier indicateur de volume (32) comportant des mesures de deux systèmes de mesure étant prévu sur ladite première poignée, et ladite première tasse à mesurer comprenant une face supérieure (34) et une face inférieure (36) ;
un premier bec verseur (40) prévu adjacent à ladite face supérieure de ladite première partie de mesure, ledit premier bec verseur ayant deux parois d'extrémité espacées (44, 46) définissant ledit premier bec verseur ;
une seconde tasse à mesurer (80) ayant une seconde partie de mesure (84) pour maintenir et mesurer un second volume, une seconde poignée (82) prévue sur ladite seconde partie de mesure, un second indicateur de volume (98) comportant des mesures de deux systèmes de mesure étant prévus sur ladite seconde poignée, ledit second volume de mesure étant plus petit que ledit premier volume de mesure, et ladite seconde partie de mesure s'empilant à l'intérieur de ladite première partie de mesure ;
un second bec verseur (94) prévu adjacent à une face supérieure (96) de ladite seconde partie de mesure ; et
**caractérisé par**
un butoir (86) prévu sur ladite face inférieure de ladite seconde partie de mesure, ledit butoir pouvant venir en prise avec une butée sur ladite face supérieure de ladite première partie de mesure, ladite butée comportant une première et une seconde extrémité de ladite extrémité desdites parois espacées dudit premier bec verseur, de telle sorte que l'utilisateur peut faire tourner ladite seconde tasse à mesurer dans le sens horaire par rapport à ladite première tasse à mesurer jusqu'à ce que ledit butoir vienne en prise avec ladite première paroi d'extrémité dudit premier bec verseur pour arrêter la rotation de ladite seconde tasse à mesurer par rapport à ladite première tasse à mesurer dans une première position déployée, et de telle sorte que l'utilisateur puisse faire tourner ladite seconde tasse à mesurer dans le sens antihoraire par rapport à ladite première tasse à mesurer jusqu'à ce que ledit butoir vienne en prise avec ladite seconde paroi d'extrémité dudit premier bec verseur pour arrêter la rotation de ladite seconde tasse à mesurer par rapport à ladite première tasse à mesurer dans une seconde position déployée, affichant ainsi alternativement l'un ou l'autre système de mesure.

2. Ensemble de tasses à mesurer selon l'une quelconque des revendications précédentes, dans lequel lesdits premier et second indicateurs de volume comprennent des mesures anglaises et/ou métriques.

3. Ensemble de tasses à mesurer selon l'une quelconque des revendications précédentes, dans lequel :
ladite première poignée et ladite seconde poignée peuvent être alignées, et ledit butoir n'est plus en prise avec les deux parois d'extrémité dudit premier bec verseur lorsque lesdites première et seconde poignées sont alignées.

4. Ensemble de tasses à mesurer (120) selon l'une quelconque des revendications précédentes, dans lequel :
ladite première partie de mesure comporte un bec verseur supplémentaire (142) espacé dudit premier bec verseur, ledit bec verseur supplémentaire comportant une première et une seconde paroi d'extrémité espacée (138) ;
ledit butoir (126) comporte un butoir supplémentaire (128) pouvant venir en prise avec lesdites première et seconde parois d'extrémité espacées dudit bec verseur supplémentaire ; et
ladite butée comporte lesdites première et seconde parois d'extrémité espacées dudit bec verseur supplémentaire, de telle sorte que l'utilisateur peut faire tourner ladite seconde tasse à mesurer dans le sens horaire ou anti-horaire par rapport à ladite première tasse à mesurer (122) jusqu'à ce que ledit butoir vienne en prise avec l'une desdites première et seconde parois d'extrémité dudit premier bec verseur et vienne en prise avec l'une desdites première et seconde parois d'extrémité dudit bec verseur supplémentaire pour arrêter la rotation de ladite seconde tasse à mesurer par rapport à ladite première tasse à mesurer dans une position déployée.

5. Ensemble de tasses à mesurer empilables (140), comprenant :
une première tasse à mesurer (20) ayant une partie de mesure (24) pour maintenir et mesurer un premier volume, une première poignée (28) prévue sur ladite première partie de mesure, un premier indicateur de volume (32) comportant des mesures de deux systèmes de mesure étant prévu sur ladite première poignée, et ladite première tasse à mesurer comprenant une face supérieure (34) et une face inférieure (36) ;
un premier bec verseur (40) prévu adjacent à ladite face supérieure de ladite première partie de mesure, ledit premier bec verseur ayant deux parois d'extrémité espacées (44, 46) définissant ledit premier bec verseur ;
une seconde tasse à mesurer ayant une seconde partie de mesure (84) pour maintenir et mesurer un second volume, une seconde poignée (82) prévue sur ladite seconde partie de mesure, un second indicateur de volume (98) comportant des mesures de deux systèmes de mesure étant prévus sur ladite seconde poignée, ledit second volume de mesure étant plus petit que ledit premier volume de mesure, et ladite seconde partie de mesure s'emboîtant à l'intérieur de ladite première partie de mesure ;
un second bec verseur (94) prévu adjacent à une face supérieure (96) de ladite seconde partie de mesure,
et **caractérisé par** :
un butoir comportant un montant (146) prévu sur la face supérieure de ladite première poignée ; et
une butée comportant une première et une seconde paroi latérale (156, 158) prévues sur une face inférieure de ladite seconde poignée, de telle sorte que l'utilisateur peut faire tourner ladite seconde tasse à mesurer dans le sens horaire ou anti-horaire par rapport à ladite première tasse à mesurer jusqu'à ce que ledit butoir vienne en prise avec l'une desdites première et seconde parois latérales de ladite seconde tasse à mesurer pour arrêter la rotation de ladite seconde tasse à mesurer par rapport à ladite première tasse à mesurer dans une position déployée dans le sens horaire ou anti-horaire, affichant ainsi alternativement l'un ou l'autre système de mesure.

6. Ensemble de tasses à mesurer empilables (180), comprenant :
une première tasse à mesurer (20) ayant une partie de mesure (24) pour maintenir et mesurer un premier volume, une première poignée (28) prévue sur ladite première partie de mesure, un premier indicateur de volume (32) comportant des mesures de deux systèmes de mesure étant prévu sur ladite première poignée, et ladite première tasse à mesurer comprenant une face supérieure (34) et une face inférieure (36) ;
un premier bec verseur (40) prévu adjacent à ladite face supérieure de ladite première partie de mesure, ledit premier bec verseur ayant deux parois d'extrémité espacées (44, 46) définissant ledit premier bec verseur ;
une seconde tasse à mesurer ayant une seconde partie de mesure (84) pour maintenir et mesurer un second volume, une seconde poignée (82) prévue sur ladite seconde partie de mesure, un second indicateur de volume (98) comportant des mesures de deux systèmes de mesure étant prévus sur ladite seconde poignée, ledit second volume de mesure étant plus petit que ledit premier volume de mesure, et ladite seconde partie de mesure s'emboîtant à l'intérieur de ladite première partie de mesure ;
un second bec verseur (94) prévu adjacent à une face supérieure (96) de ladite seconde partie de mesure,
et **caractérisé par** :
une fente (194) comportant des première et seconde parois d'extrémité latérales (196) prévues sur la face inférieure de ladite seconde poignée ;
un butoir comportant un montant (182) prévu sur la face supérieure de ladite première poignée ; et
une butée comportant lesdites première et seconde parois d'extrémité latérales de ladite fente, de telle sorte que l'utilisateur peut faire tourner ladite seconde tasse à mesurer (202) dans le sens horaire ou anti-horaire par rapport à ladite première tasse à mesurer (184) jusqu'à ce que ledit montant vienne en prise avec l'une des lesdites première et seconde parois d'extrémité de ladite fente pour arrêter la rotation de ladite seconde tasse à mesurer par rapport à ladite première tasse à mesurer dans une position déployée dans le sens horaire ou anti-horaire, respectivement, affichant ainsi alternativement l'un ou l'autre système de mesure.
